# EUROPEAN PATENT APPLICATION

(11) **EP 4 711 586 A1**
(43) Date of publication of application: **18.03.2026**
(21) Application number: 25200651.5
(22) Date of filing: 05.09.2025
(51) Int. Cl.: F01D 25/16, F16C 33/58, F16C 35/067, F01D 5/02, F01D 5/06, F02C 7/06, F16C 35/063

(54) **BEARING ANTI-ROTATION AND RETENTION SYSTEM FOR A GAS TURBINE ENGINE**

(30) Priority: 06.09.2024 US 202418826818
(71) Applicant: PRATT & WHITNEY CANADA CORP., Longueuil, Québec J4G 1A1 (CA)
(72) Inventor: SAADI, Abdelkhalek, (01BE5) Longueuil, J4G 1A1 (CA)
(74) Representative: Dehns

(57) **Abstract**

An assembly of a gas turbine engine, having: a shaft (50) having a shaft outer surface (120A) and a shaft inner surface (120B), the shaft (50) axially extends from a shaft forward end (50A) to a shaft aft end (50B), the shaft forward end (50A) defines axially extending shaft slots (130) that are circumferentially spaced apart from each other; a bearing (110) having a first race (150), the first race (150) is ring shaped with a first race outer surface (160) and a first race inner surface (170), the first race (150) is sized so the first race inner surface (170) fits around the shaft outer surface (120A), the first race (150) extends axially from a first race forward end (180) to a first race aft end (190), the first race forward end (180) defines radially inwardly extending bosses (200) that are circumferentially spaced apart from each other and aligned with ones of the axially extending slots (130) of the shaft forward end (50A), rotationally fixing the first race (150) against the shaft (50).

## Description

### BACKGROUND

Exemplary embodiments of the invention pertain to the art of bearing system and more specifically to a bearing anti-rotation and retention system for a gas turbine engine.

In gas turbine engines, a high speed rotating shaft may be supported at its axial end, against an engine stationary support structure, by a bearing. Fixing a bearing race to the shaft may require threading the shaft end, outboard of the bearing race, and fixing a coupling nut to the shaft end. This configuration may require the shaft end to be elongated so it may be configured with enough threads to secure the coupling nut to the shaft under normal loading conditions. In compact engine configurations, the elongated shaft ends may interfere with other engine structures, such as engine stationary support structures, that may require the utilization of the same space. In addition, threading the shaft may require precision machining, which may be costly and may result in waste due to either a machining error or an assembly error when cross-threading of the coupling nut against the shaft threads.

### BRIEF DESCRIPTION

According to a first aspect of the invention, an assembly of or for a gas turbine engine includes: a shaft, the shaft having a shaft outer surface and a shaft inner surface, wherein the shaft axially extends from a shaft forward end to a shaft aft end, and wherein the shaft forward end defines axially extending shaft slots that are circumferentially spaced apart from each other; a bearing having a first race, the first race is ring shaped with a first race outer surface and a first race inner surface, wherein the first race is sized so the first race inner surface fits around the shaft outer surface, and wherein the first race extends axially from a first race forward end to a first race aft end, and wherein the first race forward end defines radially inwardly extending bosses that are circumferentially spaced apart from each other and aligned with ones of the axially extending slots of the shaft forward end, whereby the first race is rotationally fixed against the shaft.

In an embodiment of the above, each of the shaft slots extends aft to a slot aft end; the shaft inner surface defines an annular notch that receives a first retaining ring such that each of the bosses is between the first retaining ring and the slot aft end for each of the shaft slots, for restricting forward axial movement of the first race.

In an embodiment of any of the above, the shaft outer surface defines an annular shoulder that is aft of the slot aft end, so that the first race aft end is against the annular shoulder when the bosses are against ones of the slot aft end.

In an embodiment of any of the above, the first race outer surface has a U-shaped cross section with a first race forward leg located at the first race forward end, and a first race aft leg located at the first race aft end, wherein the first race forward and aft legs extend radially outwardly; and the bearing includes rolling elements seated between the first race forward and aft legs.

In an embodiment of any of the above, the rolling elements are roller bearings or ball bearings.

In an embodiment of any of the above, the bearing includes one or more of a forward bearing retaining ring disposed against the first race forward leg, and an aft bearing retaining ring disposed against the first race aft leg, for axially securing the rolling elements against the first race.

**In** an embodiment of any of the above, a first portion of the rolling elements is against the first race, and the assembly includes: a stationary structure, a second race secured to the stationary structure, wherein the second race is disposed against a second portion of the rolling elements.

According to another aspect of the invention, a a gas turbine engine includes: a stationary support structure; a shaft that rotates within the stationary support structure; a bearing between the shaft and the stationary support structure; wherein: the shaft has a shaft outer surface and a shaft inner surface, and the shaft axially extends from a shaft forward end to a shaft aft end, and the shaft forward end defines axially extending shaft slots that are circumferentially spaced apart from each other; and the bearing has a first race is ring shaped with a first race outer surface and a first race inner surface, wherein the first race is sized so the first race inner surface fits around the shaft outer surface, and wherein the first race extends axially from a first race forward end to a first race aft end, and wherein the first race forward end defines radially inwardly extending bosses that are circumferentially spaced apart from each other and aligned with ones of the axially extending slots of the shaft forward end, whereby the first race is rotationally fixed against the shaft.

In an embodiment of the above, each of the shaft slots extends aft to a slot aft end; the shaft inner surface defines an annular notch that receives a first retaining ring such that each of the bosses is between the first retaining ring and the slot aft end, for restricting forward axial movement of the first race.

In an embodiment of any of the above, the shaft outer surface defines an annular shoulder that is aft of the slot aft end, so that the first race aft end is against the annular shoulder when the bosses are against the slot aft end, for restricting aft axial movement of the first race.

In an embodiment of any of the above, the first race outer surface has a U-shaped cross section with a first race forward leg located at the first race forward end, and a first race aft leg located at the first race aft end, wherein the first race forward and aft legs extend radially outwardly; and the bearing includes rolling elements seated between the first race forward and aft legs.

In an embodiment of any of the above, the rolling elements are roller bearings or ball bearings.

In an embodiment of any of the above, the bearing includes one or more of a forward bearing retaining ring disposed against the first race forward leg, and an aft bearing retaining ring disposed against the first race aft leg, for axially securing the rolling elements against the first race.

In an embodiment of any of the above, a first portion of the rolling elements is against the first race, and the engine further includes: a second race secured to the stationary support structure, wherein the second race is disposed against a second portion of the rolling elements.

In an embodiment of any of the above, the stationary support structure is a compressor or turbine case.

According to another aspect of the invention, a method of arranging an assembly of a gas turbine engine includes: positioning a first race inner surface of a first race of a bearing against a shaft outer surface of a shaft; aligning radially inwardly extending bosses at a first race forward end of the first race, that are circumferentially spaced apart from each other, with ones of axially extending shaft slots at a shaft forward end of the shaft that are circumferentially spaced apart from each other; and axially moving the first race aft against the shaft until each of the bosses is disposed against a slot aft end of ones of the shaft slots.

In an embodiment of the above, the method includes positioning a first retaining ring in an annular notch defined along a shaft inner surface of the shaft so that the bosses are axially between the first retaining ring and the slot aft end of each of the shaft slots, for restricting forward axial movement of the first race.

In an embodiment of any of the above, the method includes positioning a first race aft end of the first race against an annular shoulder, defined on the shaft outer surface, that is aft of the slot aft end, for restricting aft axial movement of the first race.

In an embodiment of any of the above, the method includes positioning a first portion of rolling elements of the bearing between a first race forward leg located at the first race forward end of the first race, and a first race aft leg located at the first race aft end of the first race, wherein a first race outer surface of the first race has a U-shaped cross section; and axially securing the rolling elements to the first race with one or more of a forward bearing retaining ring disposed against the first race forward leg and an aft bearing retaining ring disposed against the first race aft leg.

In an embodiment of any of the above, the method includes positioning a second race against a second portion of the rolling elements; and securing the second race to a stationary support structure of the gas turbine engine.

### BRIEF DESCRIPTION OF THE DRAWINGS

The following descriptions should not be considered limiting in any way. With reference to the accompanying drawings, like elements are numbered alike:
FIG. 1 is a partial cross-sectional view of a gas turbine engine;
FIG. 2 is a bearing anti-rotation and retention system of the gas turbine engine;
FIG. 3 shows details of the anti-rotation and retention system along lines 3-3 of FIG. 2; and
FIG. 4 is a flowchart showing a method of arranging a bearing anti-rotation and retention system within a gas turbine engine.

### DETAILED DESCRIPTION

A detailed description of one or more embodiments of the disclosed apparatus and method are presented herein by way of exemplification and not limitation with reference to the Figures.

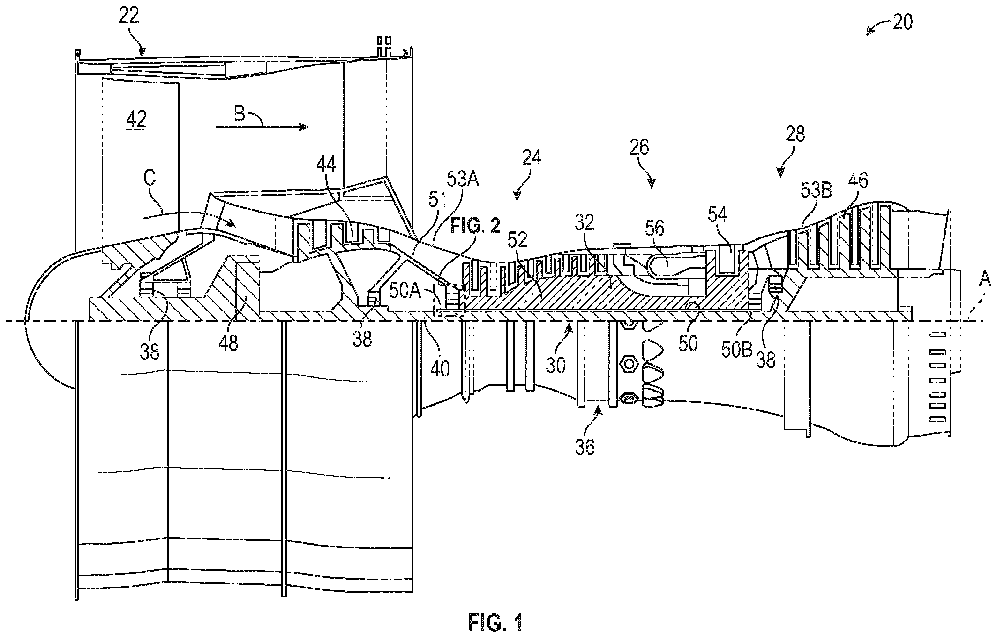

FIG. 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include other systems or features. The fan section 22 drives air along a bypass flow path B in a bypass duct, while the compressor section 24 drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a low pressure compressor 44 and a low pressure turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 extends from forward to aft ends 50A, 50B and interconnects a high pressure compressor 52 and high pressure turbine 54. A combustor 56 is arranged in exemplary gas turbine 20 between the high pressure compressor 52 and the high pressure turbine 54. An engine static structure 36 is arranged generally between the high pressure turbine 54 and the low pressure turbine 46. The engine static structure 36 further supports bearing systems 38 in the turbine section 28. The inner shaft 40 and the outer shaft 50 are concentric and rotate via bearing systems 38 coupled to a stationary structure 51 about the engine central longitudinal axis A which is collinear with their longitudinal axes. The stationary structure may be part of a compressor case 53A or turbine case 53B.

The core airflow is compressed by the low pressure compressor 44 then the high pressure compressor 52, mixed and burned with fuel in the combustor 56, then expanded over the high pressure turbine 54 and low pressure turbine 46. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example is a high-bypass geared aircraft engine. In a further example, the engine 20 bypass ratio is greater than about six (6), with an example embodiment being greater than about ten (10), the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the engine 20 bypass ratio is greater than about ten (10:1), the fan diameter is significantly larger than that of the low pressure compressor 44, and the low pressure turbine 46 has a pressure ratio that is greater than about five 5:1. Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1. It should be understood, however, that the above parameters are only exemplary of one embodiment of a geared architecture engine and that the present disclosure is applicable to other gas turbine engines including direct drive turbofans.

A significant amount of thrust is provided by the bypass flow B due to the high bypass ratio. The fan section 22 of the engine 20 is designed for a particular flight condition--typically cruise at about 0.8Mach and about 35,000 feet (10,688 meters). The flight condition of 0.8 Mach and 35,000 ft (10,688 meters), with the engine at its best fuel consumption--also known as "bucket cruise Thrust Specific Fuel Consumption ('TSFC")"--is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R)/(518.7 °R)]0.5. The "Low corrected fan tip speed" as disclosed herein according to one non-limiting embodiment is less than about 1150 ft/second (350.5 m/sec).

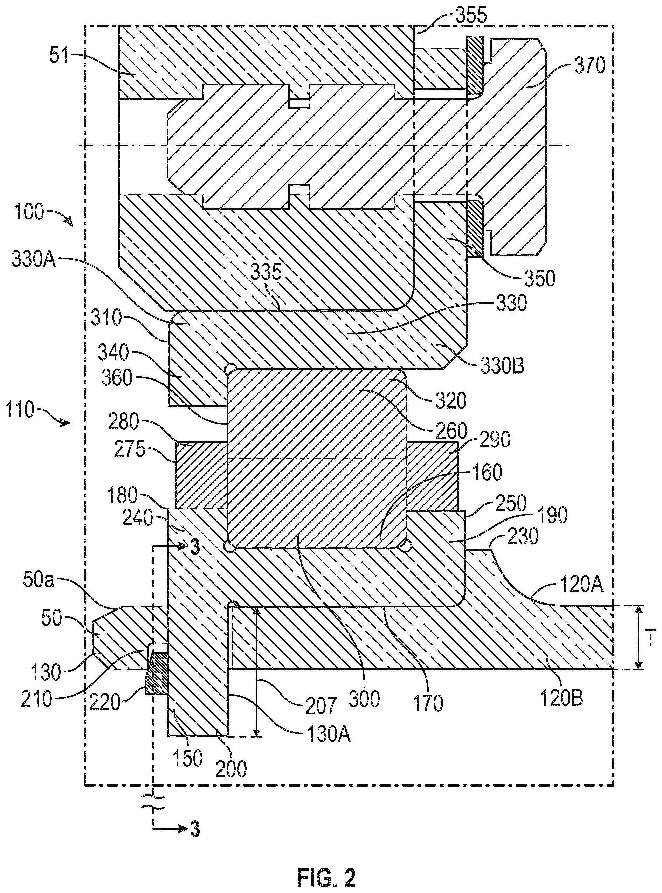

Turning to FIG. 2, the figure shows a bearing anti-rotation and retention system 100 for the engine 20 (FIG. 1). Specifically, the figure shows the stationary support structure 51 and the high speed shaft 50 that rotates radially within the stationary support structure 51 and extends from the forward end 50A to the aft end 50B (FIG. 1). A bearing 110, i.e., of the bearing system 38 (FIG. 1), is between the shaft 50 and the stationary support structure 51, which as indicated may be part of the compressor case 53A or turbine case 53B (FIG. 1). The bearing 110 may be any type of rolling bearing, e.g., with any type of rolling element, including but not limited to rollers, balls, needle, etc.

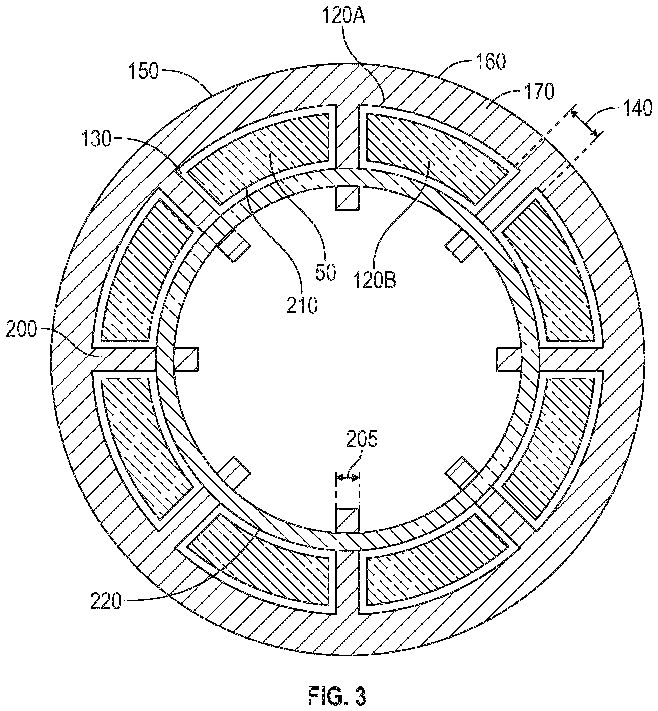

As shown in FIGS 2 and 3, the shaft 50 has a shaft outer surface 120A and a shaft inner surface 120B. The shaft 50 defines axially extending shaft slots 130 that are circumferentially spaced apart from each other. Each of the shaft slots 130 extends from the forward end 50A of the shaft 50 to a slot aft end 130A. The shaft slots 130 each have a same circumferential span 140 (FIG. 3) as each other.

The bearing 100 has a first race 150 (which may be a bearing inner race) is ring shaped with a first race outer surface 160 and a first race inner surface 170. The first race 150 is sized so the first race inner surface 170 fits around the shaft outer surface 120A. The first race 150 extends axially from a first race forward end 180 to a first race aft end 190 (FIG. 2). The first race forward end 180 defines radially inwardly extending bosses 200 (otherwise known as dogs) that are circumferentially spaced apart from each other and aligned with ones of the axially extending shaft slots 130. The bosses 200 have a circumferential width 205 (FIG. 3) that is sized for a slip fit within the slots 130. That is, the bosses 200 are keyed to fit in the shaft slots 130. With this configuration, the first race 150 is rotationally fixed against the shaft 50. The bosses 200 have a radial length 207 (FIG.2 ) that is illustrated as being greater than the shaft thickness T of the shaft 50, though this is not a requirement of the embodiments.

The shaft inner surface 120B defines an annular notch 210. The notch 210 receives a first retaining ring 220. Each of the bosses 200 is between the first retaining ring 220 and the slot aft end 130A. This configuration restricts forward axial movement of the first race 150.

With further reference to FIG. 2, the shaft outer surface 120A defines an annular shoulder 230 that is aft of the slot aft end 130A. The first race aft end 190 is against the annular shoulder 230 when each of the bosses 200 is against ones of the slot aft ends 130A. This configuration restricts aft axial movement of the first race 150.

The first race outer surface 160 has a U-shaped cross section. The first race outer surface 160 includes a first race forward leg 240 located at the first race forward end 180. The first race 150 includes a first race aft leg 250 located at the first race aft end 190. The first race forward and aft legs 240, 250 extend radially outwardly. The bearing 100 includes rolling elements 260 seated between the first race forward and aft legs 240, 250. The rolling elements 260 may be roller bearings or ball bearings.

The bearing 100 includes one or more of a forward bearing retaining ring 280 disposed against the first race forward leg 240, and an aft bearing retaining ring 290 disposed against the first race aft leg 250. The retaining rings 280, 290 (generally referenced as 275) axially secure the rolling elements 260 against the first race 150.

A first portion 300 of the rolling elements 260 is against the first race 150. A second race 310 (which may be a bearing outer race) is secured to the stationary support structure 51. The second race 310 is disposed against a second portion 320 of the rolling elements 260. This configuration radially secures the rolling elements 260 within the bearing 100 and enables rotational motion between the shaft 50 and the stationary support structure 51.

For example, the second race 310 may have an axial runner 330 with a radially inwardly extending runner 340 at one end (e.g., a forward end) 330A and a radially outwardly extending runner 350 on another end (e.g., an aft end) 330B. The axial runner 330 may be positioned between the rolling elements 260 and a radial surface 335 of the stationary support structure 51. The inwardly extending runner 340 may extend over an axial forward end 360 of the rolling elements 260 to limit relative axial motion between the rolling elements 260 and the second race 310. The outwardly extending runner 350 may extend against an axial aft surface 355 of the stationary support structure 51 and be secured to the stationary support structure 51, e.g., via a fastener 370, such as a bolt.

It is to be appreciated that the configuration of the slots 130 and bosses (i.e., dogs) 200 can be applied to the bearing outer race 310. That is, the bosses 200, retaining ring 220, and slots 130 may be utilized to secure the radially extending runner 350 of the outer race 310 against the support structure 51 for the same purpose and effect that is utilized to secure the bearing inner race 150 to the shaft 50.

The above configuration provides for anti-rotation and retention of the bearing 110 and is relatively compact and simple to arrange. It is to be appreciated that for simplicity only, the system 100 has been disclosed as applied to the forward end 50A of the shaft 50. However the configuration may be applied to the aft end 50B of the shaft 50 without departing from the scope of the embodiments. That is, forward and aft are utilized as relative terms for orienting aspects of the structures and it not intended on limiting the application of the system 100 to an inlet or exhaust of an engine 20.

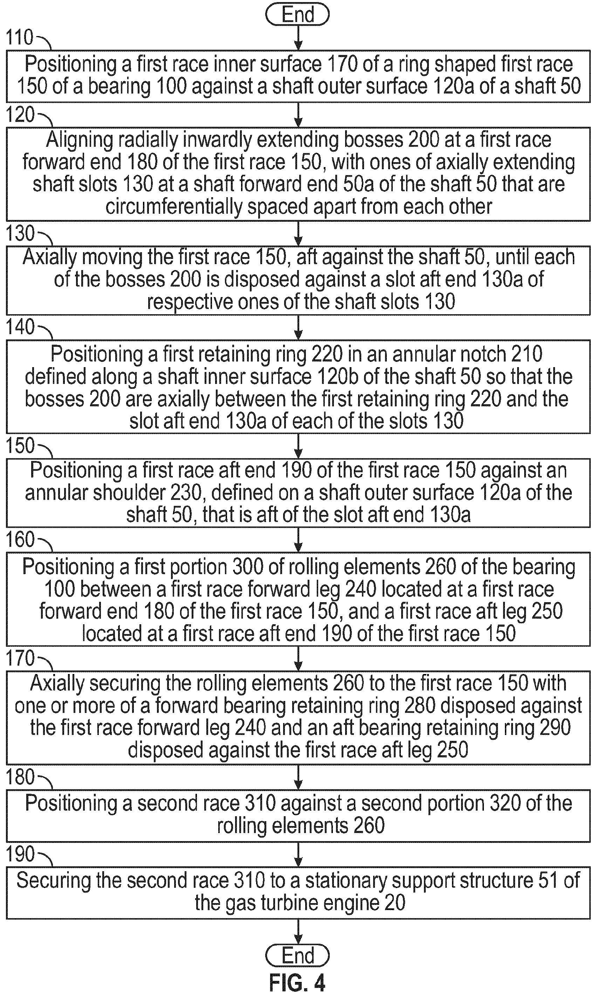

Turning to FIG. 4, a flowchart shows a method of arranging a bearing anti-rotation and retention system 100 of gas turbine engine 20.

As shown in block 100, the method includes positioning a first race inner surface 170 of a ring shaped first race 150 of a bearing 100 against a shaft outer surface 120A of a shaft 50. As shown in block 110, the method includes aligning radially inwardly extending bosses 200 at a first race forward end 180 of the first race 150, with ones of axially extending shaft slots 130 at a shaft forward end 50A of the shaft 50. As indicated, the shaft slots 130 are circumferentially spaced apart from each other.

As shown in block 130, the method includes axially moving the first race 150, aft against the shaft 50, until each of the bosses 200 is disposed against a slot aft end 130A of ones of the shaft slots 130. As shown in block 140, the method includes positioning a first retaining ring 220 in an annular notch 210 defined along a shaft inner surface 120B of the shaft 50. This configuration positions the bosses 200 axially between the first retaining ring 220 and the slot aft end 130A of each of the slots 130. With this configuration, forward axial movement of the first race 150 is restricted.

As shown in block 150, the method includes positioning a first race aft end 190 of the first race 150 against an annular shoulder 230, defined on a shaft outer surface 120A of the shaft 50, that is aft of the slot aft end 130A. This configuration restricts aft axial movement of the first race 150.

As shown in block 160, the method includes positioning a first portion 300 of rolling elements 260 of the bearing 100 between a first race forward leg 240 and a first race aft leg 250. The forward leg 240 is located at a first race forward end 180 of the first race 150 and the second leg 250 is located at a first race aft end 190 of the first race 150. As indicated, the first race outer surface 160 has a U-shaped cross section.

As shown in block 170, the method includes axially securing the rolling elements 260 to the first race 150 with one or more retaining rings 275. The retaining rings include a forward bearing retaining ring 280 disposed against the first race forward leg 240 and an aft bearing retaining ring 290 disposed against the first race aft leg 250.

As shown in block 180, the method includes positioning a second race 310 against a second portion 320 of the rolling elements 260. As shown in block 190, the method includes securing the second race 310 to a stationary support structure 51 of the gas turbine engine 20.

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present disclosure. **In** addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. An assembly for a gas turbine engine (20), the assembly comprising:
a shaft (50), the shaft having a shaft outer surface (120A) and a shaft inner surface (120B), wherein the shaft (50) axially extends from a shaft forward end (50A) to a shaft aft end (50B), and wherein the shaft forward end (50A) defines axially extending shaft slots (130) that are circumferentially spaced apart from each other; and
a bearing (110) having a first race (150), wherein:
the first race (150) is ring shaped with a first race outer surface (160) and a first race inner surface (170), wherein the first race (150) is sized so the first race inner surface (170) fits around the shaft outer surface (120A), and wherein the first race (150) extends axially from a first race forward end (180) to a first race aft end (190), and
the first race forward end (180) defines radially inwardly extending bosses (200) that are circumferentially spaced apart from each other and aligned with ones of the axially extending slots (130) of the shaft forward end (50A), whereby the first race (150) is rotationally fixed against the shaft (50).

2. The assembly of claim 1, wherein:
each of the shaft slots (130) extends aft to a slot aft end (130A); and
the shaft inner surface (120B) defines an annular notch (210) that receives a first retaining ring (220) such that each of the bosses (200) is between the first retaining ring (220) and the slot aft end (130A) for each of the shaft slots (130), for restricting forward axial movement of the first race (150).

3. The assembly of claim 2, wherein the shaft outer surface (120A) defines an annular shoulder (230) that is aft of the slot aft end (130A), so that the first race aft end (190) is against the annular shoulder (230) when the bosses (200) are against ones of the slot aft end (130A).

4. The assembly of any preceding claim, wherein:
the first race outer surface (160) has a U-shaped cross section with a first race forward leg (240) located at the first race forward end (180), and a first race aft leg (250) located at the first race aft end (190), wherein the first race forward and aft legs (240, 250) extend radially outwardly; and
the bearing (110) includes rolling elements (260) seated between the first race forward and aft legs (240, 250).

5. The assembly of claim 4, wherein the rolling elements (260) are roller bearings or ball bearings.

6. The assembly of claim 4 or 5, wherein the bearing (110) includes a forward bearing retaining ring (280) disposed against the first race forward leg (240), and/or an aft bearing retaining ring (290) disposed against the first race aft leg (250), for axially securing the rolling elements (260) against the first race (150).

7. The assembly of any of claims 4 to 6, wherein:
a first portion (300) of the rolling elements (260) is against the first race (150), and the assembly comprises:
a stationary structure (51); and
a second race (310) secured to the stationary structure (51), wherein the second race (310) is disposed against a second portion (320) of the rolling elements (260).

8. A gas turbine engine (20), comprising:
a stationary support structure (51); and
the assembly of any of claims 1 to 6, wherein:
the shaft (50) rotates within the stationary support structure (51); and
the bearing (110) is between the shaft (50) and the stationary support structure (51),
optionally wherein:
each of the shaft slots (130) extends aft to a slot aft end (130A), and the shaft inner surface (120B) defines an annular notch (210) that receives a first retaining ring (220) such that each of the bosses (200) is between the first retaining ring (220) and the slot aft end (130A), for restricting forward axial movement of the first race (150), and further optionally:
the shaft outer surface (120A) defines an annular shoulder (230) that is aft of the slot aft end (130A), so that the first race aft end (190) is against the annular shoulder (230) when the bosses (200) are against the slot aft end (130A), for restricting aft axial movement of the first race (150).

9. The engine of claim 8, wherein:
a first portion (300) of the rolling elements (260) is against the first race (150), and
the engine (20) further comprises a second race (310) secured to the stationary support structure (51), wherein the second race (310) is disposed against a second portion (320) of the rolling elements (260).

10. The engine (20) of claim 8 or 9, wherein the stationary support structure (51) is a compressor or turbine case (53A; 53B).

11. A method of arranging an assembly of a gas turbine engine (20), comprising:
positioning a first race inner surface (170) of a first race (150) of a bearing (110) against a shaft outer surface (120A) of a shaft (50);
aligning radially inwardly extending bosses (200) at a first race forward end (180) of the first race (150), that are circumferentially spaced apart from each other, with ones of axially extending shaft slots (130) at a shaft forward end (50A) of the shaft (50) that are circumferentially spaced apart from each other; and
axially moving the first race (150) aft against the shaft (50) until each of the bosses (200) is disposed against a slot aft end (130A) of ones of the shaft slots (130).

12. The method of claim 11, further comprising positioning a first retaining ring (220) in an annular notch (210) defined along a shaft inner surface (120B) of the shaft (50) so that the bosses (200) are axially between the first retaining ring (220) and the slot aft end (130A) of each of the shaft slots (130), for restricting forward axial movement of the first race (150).

13. The method of claim 11 or 12, further comprising positioning a first race aft end (190) of the first race (150) against an annular shoulder (230), defined on the shaft outer surface (120A), that is aft of the slot aft end (130A), for restricting aft axial movement of the first race (150).

14. The method of any of claims 11 to 13, including:
positioning a first portion (300) of rolling elements (260) of the bearing (110) between a first race forward leg (240) located at the first race forward end (180) of the first race (150), and a first race aft leg (250) located at a or the first race aft end (190) of the first race (150), wherein a first race outer surface (160) of the first race (150) has a U-shaped cross section; and
axially securing the rolling elements (260) to the first race (150) with a forward bearing retaining ring (280) disposed against the first race forward leg (240) and/or an aft bearing retaining ring (290) disposed against the first race aft leg (250).

15. The method of any of claims 11 to 14, including:
positioning a second race (310) against a second portion (320) of the rolling elements (260); and
securing the second race (310) to a stationary support structure (51) of the gas turbine engine (20).
